# EUROPÄISCHE PATENTSCHRIFT

(11) **EP 0 974 508 B1**
(45) Veröffentlichungstag und Bekanntmachung des Hinweises auf die Patenterteilung: **23.01.2008**
(21) Anmeldenummer: 99114041.9
(22) Anmeldetag: 20.07.1999
(51) Int. Cl.: B62D 7/14, B62D 5/30

(54) **Lenkvorrichtung für selbstfahrende Arbeitsmaschinen und Zugmaschinen**
Steering system for automotive working machines and tractors
Système de direction pour machines de travail automoteurs et tracteurs

(30) Priorität: 24.07.1998 DE 19833383
(43) Veröffentlichungstag der Anmeldung: 26.01.2000
(73) Patentinhaber: CLAAS Selbstfahrende Erntemaschinen GmbH, 33428 Harsewinkel (DE)
(72) Erfinder: Pickert, Heinrich, 33397 Rietberg (DE)

(56) Entgegenhaltungen:
- DE-C- 3 833 420
- DE-C- 3 833 421
- US-A- 5 526 891
- PATENT ABSTRACTS OF JAPAN vol. 018, no. 368 (M-1637), 12. Juli 1994 (1994-07-12) & JP 06 099824 A (TOYOTA AUTOM LOOM WORKS LTD), 12. April 1994 (1994-04-12)

## Beschreibung

Die Erfindung betrifft eine Lenkvorrichtung für selbstfahrende Arbeitsmaschinen und Zugmaschinen mit jeweils einem Räderpaar zugeordneten Lenkzylindern, denen ein Fluid von einer Ventileinheit zuführbar ist und mit mindestens einer Hydraulikpumpe, die über Hydraulikleitungen mit der Ventileinheit verbunden sind, wobei die Ventileinheit eine jeweils einem Lenkzylinder zugeordnete Schalteinheit mit Schaltventilen aufweist. Eine derartige Lenkvorrichtung ist zum Beispiel aus der JP 06 099 824 A bekannt.

Aus der EP 0 439 370 B1 ist eine Lenkvorrichtung für selbstfahrende Arbeitsmaschinen mit einer Lenksteuereinheit bekannt, die zur Einstellung verschiedener Lenkungsarten, beispielsweise Vorderrad- sowie Allradlenkung, eine Anzahl von elektromagnetisch betätigbaren Wegeventilen aufweist. Ein erstes Steuerventil ermöglicht die Umschaltung zwischen Vorderrad- und Allradlenkung. Ein zweites nachgeordnetes Steuerventil ermöglicht die Einstellung zweier unterschiedlicher Allradlenkungsarten. Zur Bereitstellung des Fluids ist die Lenksteuereinheit mit einer Hydraulikpumpe verbunden.

Nachteilig an der bekannten Lenkvorrichtung ist jedoch, daß bei Stromausfall, bei Ausfall der Pumpe oder sonstigen Störfällen keine Vorkehrungen getroffen sind, die Lenkbarkeit der Arbeitsmaschine aufrechtzuerhalten.

Zur Sicherstellung der Lenkbarkeit einer Arbeitsmaschine im Notbetrieb, d.h. bei Eintritt des Schadensfalls, ist aus der WO 96/01760 A1 eine Lenkvorrichtung für selbstfahrende Arbeitsmaschinen bekannt, bei der eine Lenksteuereinheit mit zwei Hydraulikpumpen in Verbindung steht. Das von den jeweiligen Hydraulikpumpen geförderte Fluid wird in eine gemeinsame Hydraulikleitung zusammengeführt, bevor es der Lenksteuereinheit zugeführt wird. Die Hydraulikpumpen sind unterschiedlich ausgelegt, wobei im Normalbetrieb zuerst eine erste Hydraulikpumpe mit höherer Förderleistung in Betrieb genommen wird und die zweite Hydraulikpumpe als Folgepumpe erst dann hinzugeschaltet wird, sobald die fördernde erste Hydraulikpumpe den größtmöglichen Förderstrom erreicht hat. Bei Ausfall einer Pumpe kann die Förderung des Fluids durch die andere Pumpe gewährleistet werden, wobei in den Hydraulikleitungen eingebaute Rückschlagventile ein Zurückfördern des Fluids in den beschädigten Zweig der Förderleitung verhindern. Nachteilig an der bekannten Lenkvorrichtung ist, daß lediglich ein Schadensfall in einem der jeweiligen Hydraulikpumpe nahen Bereich der Förderleitungen erkannt und damit eine Lenkung aufrechterhalten werden kann.

Aufgabe der Erfindung ist es daher, eine Lenkvorrichtung für selbstfahrende Arbeitsmaschinen und Zugmaschinen derart weiterzubilden, daß jederzeit eine sichere Lenkung der Arbeits- bzw. Zugmaschine gewährleistet ist.

Zur Lösung der Aufgabe ist die Erfindung dadurch gekennzeichnet, dass im normalen Betriebszustand die Lenkzylindern über separate Lenksteuereinheiten ansteuerbar sind und dass die Schaltventile in einem Störungszustand selbsttätig derart umschaltbar sind, dass die Lenkzylinder über eine einzige Lenksteuereinheit ansteuerbar sind.

Der besondere Vorteil der Erfindung liegt darin, daß die Schaltventile der Schalteinheiten so ausgestaltet sind, daß sie im Schadensfall bzw. im Störungszustand der Lenkvorrichtung automatisch in eine Position umgeschaltet werden, in der die Lenkzylinder lediglich mit einer einzigen Lenksteuereinheit in Verbindung stehen. Vorzugsweise befindet sich im Störungszustand eine erste Schalteinheit in Sperrposition, während die Schaltventile einer zweiten Schalteinheit derart geschaltet sind, daß die Lenkzylinder nacheinander mit dem Fluid beaufschlagt werden.

Nach einer Ausgestaltung der Erfindung ist die Schalteinheit zwischen der Lenksteuereinheit und dem diesem zugeordneten Lenkzylinder angeordnet. Hierdurch wird im Schadensfall ein Umschalten in einen sicheren Zustand gewährleistet, wobei ein Hydraulikkreislauf mit seinen defektanfälligen Komponenten vollständig abgeschaltet werden kann.

Nach einer Ausgestaltung der Erfindung ist die im Störungszustand mit den Lenkzylindern in Verbindung stehende Schalteinheit mit einer lediglich hydraulischen Einrichtung aufweisenden Lenksteuereinheit verbunden, so daß im Schadensfall ein sicherer Zustand erzielt wird. Dabei sind die Lenkzylinder mittels der Schaltventile der Schalteinheit in einem Allradlenkmodus geschaltet.

Nach einer Ausführungsform der Erfindung besteht die Lenkvorrichtung aus zwei Hydraulikkreisläufen, wobei ein der in Fahrtrichtung vorderen Achse zugeordneter Lenkzylinder einer hydraulischen Lenksteuereinheit und ein der in Fahrtrichtung hinteren Achse zugeordneter Lenkzylinder einer elektrohydraulischen Lenksteuereinheit zugeordnet ist. Hierdurch kann der der hinteren Achse zugeordnete Lenkzylinder auf einfache Weise elektrisch entsprechend eines Lenkprogrammes dem der vorderen Achse zugeordneten Lenkzylinder nachgesteuert werden. Durch die parallele Ansteuerung der Lenkzylinder und der elektrischen Ansteuerbarkeit einer Lenksteuereinheit lassen sich variabel mehrere Lenkungsarten bzw. -typen verwirklichen. Bei Eintritt eines Schadensfalles, der durch Stromausfall, Pumpenausfall, durch Ausfall der Steuerventile oder durch einen sonstigen Defekt verursacht worden ist, kann nach Umschaltung auf die hydraulische Lenksteuereinheit eine Lenkung mittels einer durch eine Notlenkpumpe gespeisten Allradlenkung aufrechterhalten bleiben.

Nach einer Ausgestaltung der Erfindung sind die Schaltventile der Schalteinheiten als direkt geschaltete Sitzventile derart ausgestaltet, daß sie ohne Zuführung von elektrischer Energie in die für den Störungszustand vorgegebene Position bringbar sind.

Nach einer Ausgestaltung der Erfindung sind die Schaltventile der ersten und zweiten Schalteinheit jeweils derart zusammenschaltbar, daß sowohl der erste Lenkzylinder als auch der zweite Lenkzylinder der vorderen Achse bzw. der hinteren Achse der Arbeitsmaschine zugeordnet werden kann. Hierdurch wird ermöglicht, daß jeweils die vordere Achse durch eine hydraulisches Ventil unter Vorgabe eines Lenksollwertes gesteuert wird, wobei die hinteren Achse in Abhängigkeit von dem Lenksollwert nach einem bestimmten Lenkprogramm nachgeführt wird.

Nach einer Weiterbildung der Erfindung ist die Notlenkpumpe als Konstantpumpe ausgebildet, die in Abhängigkeit von der Fahrgeschwindigkeit der Arbeitsmaschine betrieben wird. Es läßt sich somit ein einfacher Aufbau der Notlenkpumpe realisieren.

Nach einer Ausgestaltung der Erfindung werden die Lenkzylinder jeweils durch elektromagnetisch betätigbare Steuerventile gesteuert, während eine mit einem Lenkrad wirkverbundene hydraulische Einrichtung als Lenkwinkelsollwertgeber nach einem Lenkprogramm eins oder zwei dieser Steuerventile ansteuert. Auf diese Weise wird ein zur rein hydraulischen Ansteuerung der Lenkzylinder übereinstimmendes Lenkverhalten bzw. Lenkgefühl beim Fahrer erzeugt.

Weitere Vorteile der Erfindung ergeben sich aus den weiteren Unteransprüchen.

Ausführungsbeispiele der Erfindung werden nachfolgend anhand der Zeichnungen näher beschrieben.

Es zeigen:
- Figur 1: ein Blockschaltbild einer Lenkvorrichtung nach einem ersten Ausführungsbeispiel im Betriebszustand,
- Figur 2: ein Blockschaltbild einer Lenkvorrichtung nach Figur 1 im Störungszustand,
- Figur 3: ein Blockschaltbild einer Lenkvorrichtung nach einem zweiten Ausführungsbeispiel in einem Störungszustand,
- Figur 4: ein Blockschaltbild einer Lenkvorrichtung nach einem dritten Ausführungsbeispiel in einem Störungszustand,
- Figur 5: ein Blockschaltbild einer Lenkvorrichtung nach einem vierten Ausführungsbeispiel in einem Störungszustand,
- Figur 6: ein Blockschaltbild einer Lenkvorrichtung nach einem fünften Ausführungsbeispiel in einem Betriebszustand,
- Figur 7: ein Blockschaltbild einer Lenkvorrichtung nach einem sechsten Ausführungsbeispiel im Betriebszustand und
- Figur 8: ein Blockschaltbild einer Lenkvorrichtung nach einem siebten Ausführungsbeispiel in einem Betriebszustand.

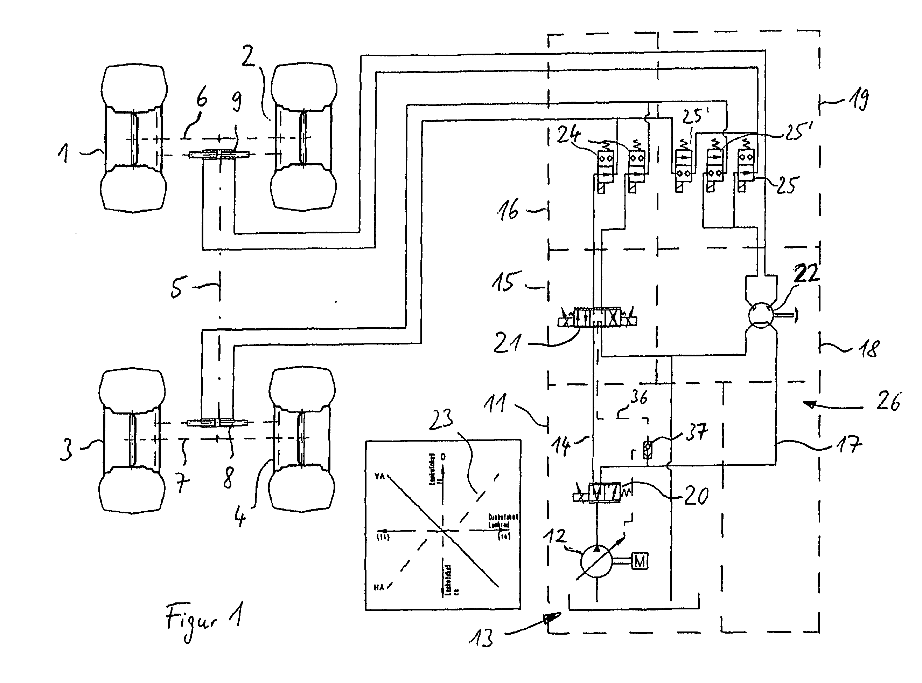

Wie aus Figur 1 zu erkennen ist, weist eine Arbeitsmaschine vier Räder (1, 2, 3, 4) auf, die jeweils paarweise an den Enden einer Längsachse (5) der Arbeitsmaschine angeordnet sind. Beispielsweise bilden die Räder (1) und (2) ein Räderpaar einer in Fahrtrichtung vorderen Achse (6) und die Räder (3) und (4) ein Räderpaar einer in Fahrtrichtung hinteren Achse (7). Zur Betätigung der Räder (3) und (4) ist ein doppelt wirkender erster Lenkzylinder (8) und zur Betätigung der Räder (1 und 2) ein doppelt wirkender zweiter Lenkzylinder (9) vorgesehen.

Die Lenkzylinder (8) und (9) sind jeweils über Hydraulikleitungen mit einer Ventileinheit verbunden. Die Ventileinheit besteht aus einer oder mehreren Lenksteuer- und Schalteinheiten. Sie ist mit einer Versorgungseinheit (11) verbunden, die eine Hydraulikpumpe (12) aufweist.

Im normalen Betriebszustand der Lenkvorrichtung ist die Hydraulikpumpe (12) über eine erste Förderleitung (14) mit einer ersten Lenksteuereinheit (15), mit einer sich daran anschließenden ersten Schalteinheit (16) und mit dem ersten Lenkzylinder (8) verbunden (erster Hydraulikkreislauf 13). Ferner ist die Hydraulikpumpe (12) über eine zweite Förderleitung (17) mit einer zweiten Lenksteuereinheit (18), mit einer sich daran anschließenden zweiten Schalteinheit (19) und mit dem zweiten Lenkzylinder (9) verbunden (zweiter Hydraulikkreislauf 26).

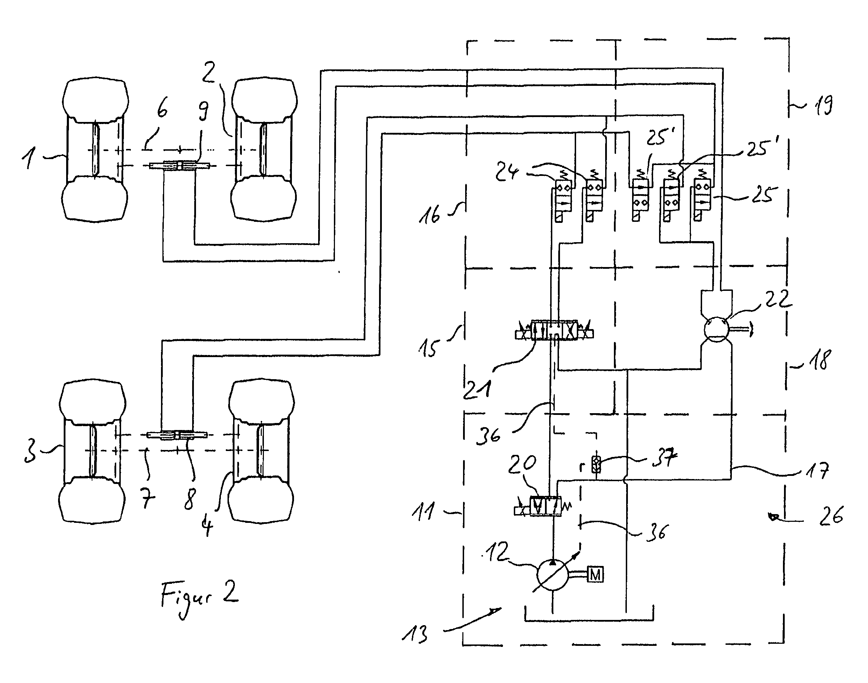

Die Versorgungseinheit (11) weist ein der Hydraulikpumpe (12) nachgeordnetes Steuerventil (20) auf, das in einer Betriebszustandsposition beide Lenksteuereinheiten (15) und (18) mit dem Fluid beaufschlagt, während es - wie in Figur 2 - dargestellt, in der Störungszustandsposition lediglich eine Verbindung der Hydraulikpumpe (12) zu der zweiten Lenksteuereinheit (18) ermöglicht.

Die erste Lenksteuereinheit (15) besteht aus einem elektromagnetisch betätigbarem Ventil (21), das vorzugsweise als Proportionalventil ausgebildet ist. Die zweite Lenksteuereinheit (18) weist eine hydraulische Einrichtung (22) (in Fachkreisen auch Orbitrol genannt), das in Wirkverbindung mit einem nicht dargestellten Lenkrad steht und entsprechend der in Figur 1 dargestellten durchgezogenen Kennlinie einen Lenkwinkel für die vordere Achse (6) bewirkt. Entsprechend einer gestrichelt gezeichneten Kennlinie in dem Diagramm wird mittels des Proportionalventils (21) der Lenkzylinder (8) der hinteren Achse (7) gesteuert. Dabei ist für die elektrohydraulische Nachlenkung der hinteren Achse (7) die Wahl von mehreren Lenkprogrammen möglich. Beispielsweise ist eine Kennlinie "Straßenfahrt" (23) anwählbar, die bei Verschwenken der vorderen Achse (6) in eine Drehrichtung ein Verschwenken der hinteren Achse (7) in eine entgegengesetzte Drehrichtung bewirkt. Neben des Vorsehens mehrerer Lenkprogramme und der wahlweise vornehmbaren isolierten Lenkung der vorderen Achse (6) oder der hinteren Achse (7) kann eine Allradlenkung eingestellt werden, die zum einen eine parallele Stellung der vorderen Achse (6) und hinteren Achse (7) (Hundegang) und zum anderen eine entsprechend der Kennlinie beschriebene enge Lenkung mit geringem Wendekreis der Arbeitsmaschine ermöglicht.

Die Schalteinheiten (16) und (19) weisen jeweils Schaltventile (24) bzw. (25) auf, die jeweils zwei Schaltstellungen einnehmen können. Im Betriebszustand gemäß Figur 1 sind die beiden Schaltventile (24) der ersten Schalteinheit (16) in Durchlaßrichtung geschaltet. Die zweite Schalteinheit (19) weist drei Schaltventile (25, 25') auf, von denen ein erstes Schaltventil (25) in Durchlaßposition und die beiden anderen Schaltventile (25') in Sperrposition geschaltet sind. Das erste in Durchlaßposition geschaltete Schaltventil (25) ist einerseits mit dem hydraulischen Ventil (22) und andererseits über Hydraulikleitungen mit dem zweiten Lenkzylinder (9) und dem weiteren Schaltventil (25') verbindbar. Ein weiteres in Sperrposition befindliches Schaltventil (25') ist zum einen mit dem hydraulischen Ventil (22) und zum anderen mit dem ersten Lenkzylinder (8) verbunden. Das dritte, in Sperrposition befindliche Schaltventil (25') ist mit dem anderen Anschluß des ersten Lenkzylinders (8) einerseits und dem in Durchlaßposition befindlichen ersten Schaltventil (25) verbunden.

Im Schadensfall bzw. im Störungszustand der Lenkvorrichtung werden die Schaltventile (24) und (25, 25') selbsttätig in eine zweite Schaltposition entsprechend Figur 2 umgeschaltet. Die Schaltventile (24, 25, 25') sind als elektromagnetisch betätigbare 2/2-Wegeventile ausgebildet, die jeweils über eine Rückstellfeder in die Schaltposition gemäß Figur 2 schaltbar sind. Dabei erfolgt die Umschaltung ohne Zuführung elektrischer Energie, so daß im Fehlerfall ein sicherer Zustand der Lenkvorrichtung gewährleistet ist.

Wie aus Figur 2 zu ersehen ist, sind die Schaltventile (24) der ersten Schalteinheit (16) in Sperrposition, während das Schaltventil (25) der Schalteinheit (19) ebenfalls in Sperrposition und die beiden anderen Schaltventile (25') in Durchlaßposition befindlich sind. Auf diese Weise wird eine Allradlenkung unter Umgehung der ersten Lenksteuereinheit (15) und der ersten Schalteinheit (16) ermöglicht.

In den folgenden Ausführungsbeispielen sind die mit dem ersten Ausführungsbeispiel übereinstimmenden Bauteile mit denselben Bezugsziffern versehen.

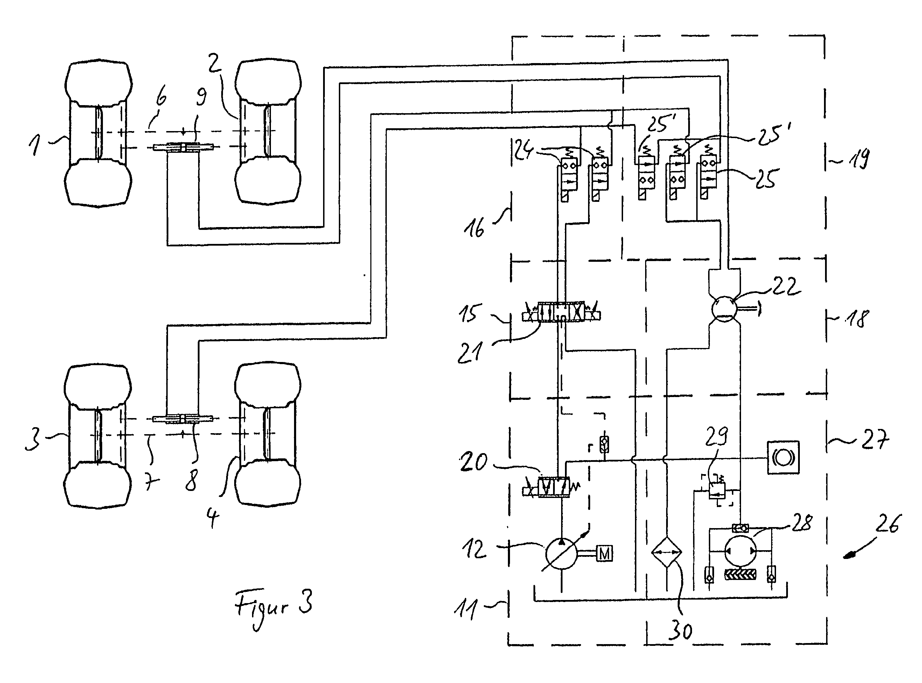

Gemäß einem zweiten Ausführungsbeispiel nach Figur 3 ist der zweite Hydraulikkreislauf (26) mit einer zweiten Versorgungseinheit (27) zuschaltbar. Diese Versorgungseinheit (27) weist eine Notlenkpumpe (28) auf, die durch eine nicht dargestellten, mit den Rädern der Arbeitsmaschine fest verbundenen Teil des Antriebstranges angetrieben wird. Die Notlenkpumpe (28) ist vorzugsweise als Konstantpumpe ausgebildet, die beispielsweise als Zahnradpumpe eine geschwindigkeitsabhängige Förderleistung zur Verfügung stellt. Die Notlenkpumpe (28) weist zwei Förderrichtungen auf und ist über ein Druckbegrenzungsventil (29) vor Überlastung geschützt. Da das Fluid in dem zweiten Hydraulikkreislauf (26) mittels der Notlenkpumpe (28) im Schadensfall ohne Unterbrechung gefördert wird, ist ein Kühler (30) zur Kühlung des Fluids vorgesehen.

Tritt beispielsweise ein Schadensfall auf, bei dem die erste Hydraulikpumpe (12) nicht funktionsfähig ist, schaltet die Lenkvorrichtung automatisch in den Störungszustand. In dem Störungszustand sind die Schaltventile (24, 25, 25') der Schalteinheiten (16) bzw. (19) entsprechend dem ersten Ausführungsbeispiel Fig. 1 und Fig. 2 geschaltet, wobei nun das Fluid durch die Notlenkpumpe (28) gefördert bzw. bereitgestellt wird und über die hydraulische Einrichtung (22) nacheinander den Lenkzylindern (8) und (9) zugeleitet wird.

Das Steuerventil (20) ist derart elektromagnetisch ansteuerbar, daß bei geringer Fahrgeschwindigkeit, bei der die Notlenkpumpe (28) nicht das erforderliche Fördervolumen zur Steuerung der vorderen Achse (6) aufbringen kann, die hydraulische Einrichtung (22) ein Teilfluidstrom von dem ersten Hydralikkreislauf (13) abgezweigt wird. Die hydraulische Einrichtung (22) wird somit mit einem konstanten Fluidstrom beaufschlagt. Mittels Lastmeldeleitungen (36) und Wechselventilen (37) läßt sich die Hydraulikpumpe (12) auf einen erforderlichen Betriebsdruck bzw. Fördervolumen einstellen.

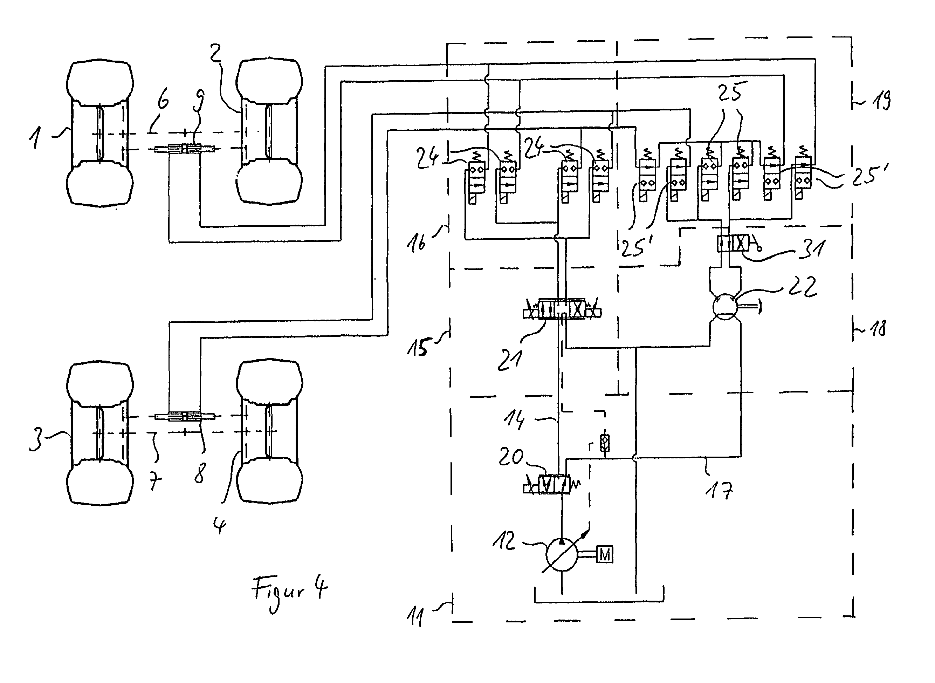

Figur 4 zeigt ein drittes Ausführungsbeispiel der Lenkvorrichtung, das im Unterschied zu dem ersten Ausführungsbeispiel gemäß Figur 1 und Figur 2 modifizierte Schalteinheiten (16) bzw. (19) aufweist. Die Schalteinheiten (16) und (19) weisen jeweils eine doppelte Anzahl von Schaltventilen (24) bzw. (25, 25') auf, so daß die Förderleitungen (14) und (17) jeweils unterschiedlichen Lenkzylindern (8) und (9) zuordbar sind. Diese Lenkvorrichtung eignet sich für Maschinen mit zwei Hauptfahrtrichtungen, wobei beispielweise die vordere Achse (6) mittels der zweiten Lenksteuereinheit (18) beaufschlagbar ist. Zu diesem Zweck ist ein Lenksinnventil (31) vorgesehen, das bei Drehung der Fahrerkabine um 180° die zweite Förderleitung (17) stets mit dem vorderen Lenkzylinder (9) verbindet. Auf diese Weise wird stets die vordere Achse (6) durch die hydraulische Lenksteuereinheit (18) und die hintere Achse (7) durch die elektrohydraulische Lenksteuereinheit (15) gesteuert.

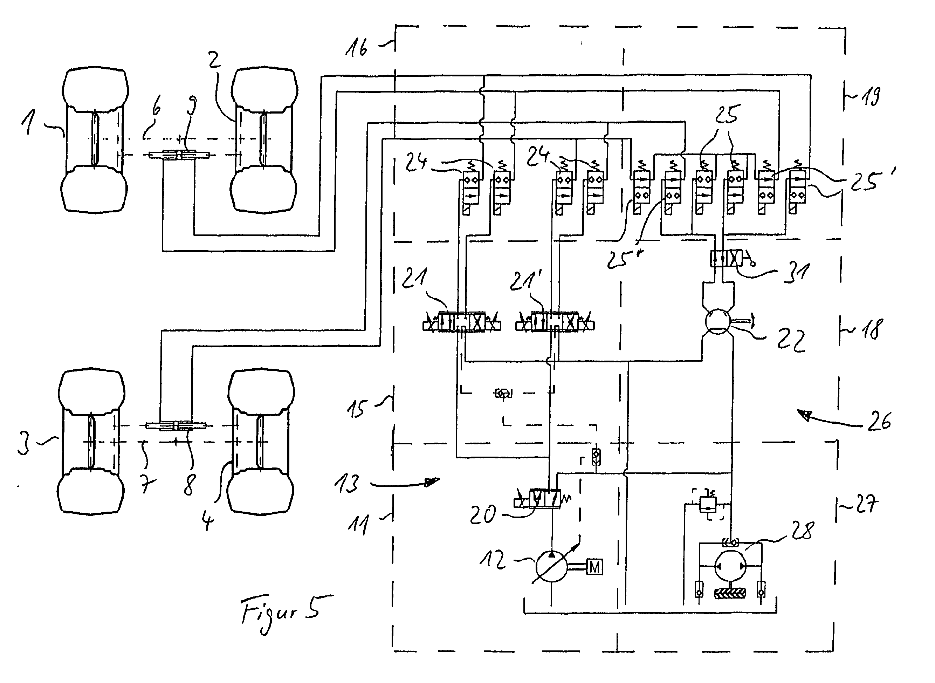

Nach einem weiteren Ausführungsbeispiel gemäß Figur 5 sind im Unterschied zu dem vorherigen Ausführungsbeispiel dem zweiten Hydraulikkreislauf (26) die Notlenkpumpe (28) einerseits und dem ersten Hydraulikkreislauf (13) eine aus zwei parallelen Ventilen (21) bestehende erste Lenksteuereinheit (15) zugeordnet. Dieses Ausführungsbeispiel ermöglicht die Steuerung der Lenkzylinder (8) und (9) jeweils durch ein Proportionalventil (21, 21'). Die Lenkzylinder (8) und (9) sind jeweils durch die als 4/3-Wegeventile ausgebildeten Proportionalventile (21) bzw. (21') getrennt steuerbar. Gemäß dem in Figur 5 angenommenen Störungsfall werden die Lenkzylinder (8) und (9) unter Einschluß der hydraulischen Einrichtung (22) betätigt. Gemäß diesem Ausführungsbeispiel können die Achsen (6) und (7) gleichzeitig über je ein Steuerventil (21, 21') angesteuert werden.

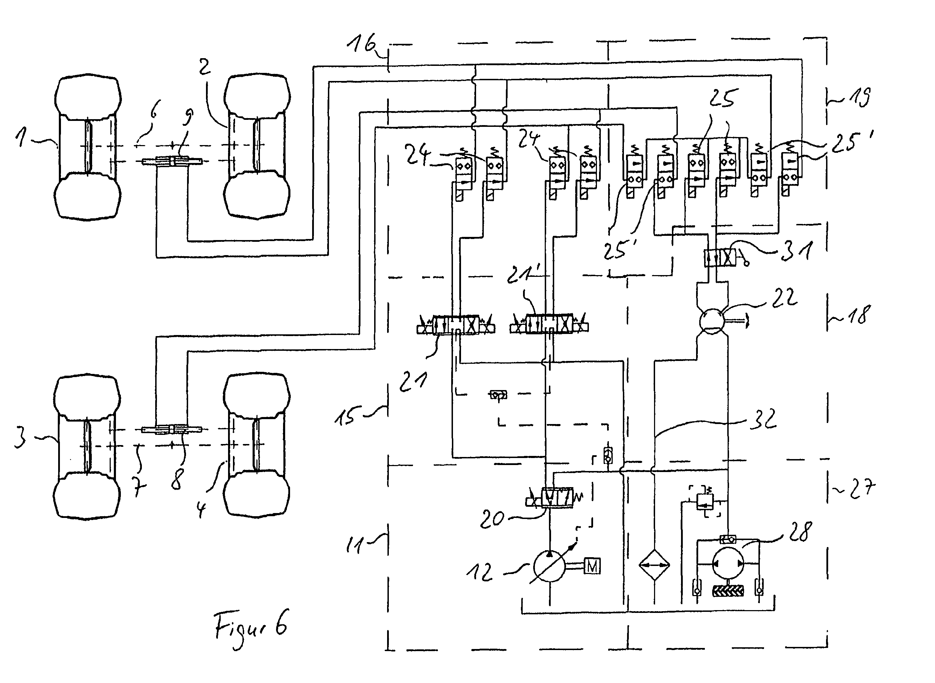

Nach einem fünften Ausführungsbeispiel gemäß Figur 6 sind wie im vorherigen Ausführungsbeispiel zwei Proportionalventile (21, 21') vorgesehen, die im Betriebzustand die Ansteuerung der Achsen (6) und (7) ermöglichen. Im dargestellten Betriebszustand sind die Schaltventile (25, 25') derart geschaltet, daß das Fluid unter Umgehung der Lenkzylinder (8, 9) direkt zu der hydraulischen Einrichtung (22) zurückfließt. Die hydraulische Einrichtung (22) ist damit quasi kurzgeschlossen ,und der von der hydraulischen Einrichtung (22) verdrängte Fluidstrom hat somit keinen Einfluß auf den Ausschlag der Räder (1, 2, 3, 4). Folglich wird an dem mit der hydraulischen Einrichtung (22) wirkverbundenen Lenkrad ein Lenkradgegenmoment erzeugt, das demjenigen bei Ansteuerung der Lenkzylinder (8) und (9) mittels Betätigigung der hydraulischen Einrichtung (22) entspricht. Das Lenkrad kann somit als Lenkwinkel-Sollwertgeber eingesetzt werden, wobei der Fahrer der Maschine das gleiche Lenkgefühl wahrnimmt. Zu diesem Zweck ist das Lenkrad mit einem elektrischen Drehgeber wirkverbunden. Der Drehgeber kann als Inkrementalgeber ausgebildet sein und an der Lenkwelle angeordnet sein. Der somit erzeugte Sollwert steuert nach einem Lenkprogramm entsprechend der in Figur 1 dargestellten Kennlinie die Proportionalventile (21, 21'). In diesem Ausführungsbeispiel ist eine Rückförderleitung (32) der hydraulischen Einrichtung (22) vorgesehen, die direkt mit dem Tank verbunden ist.

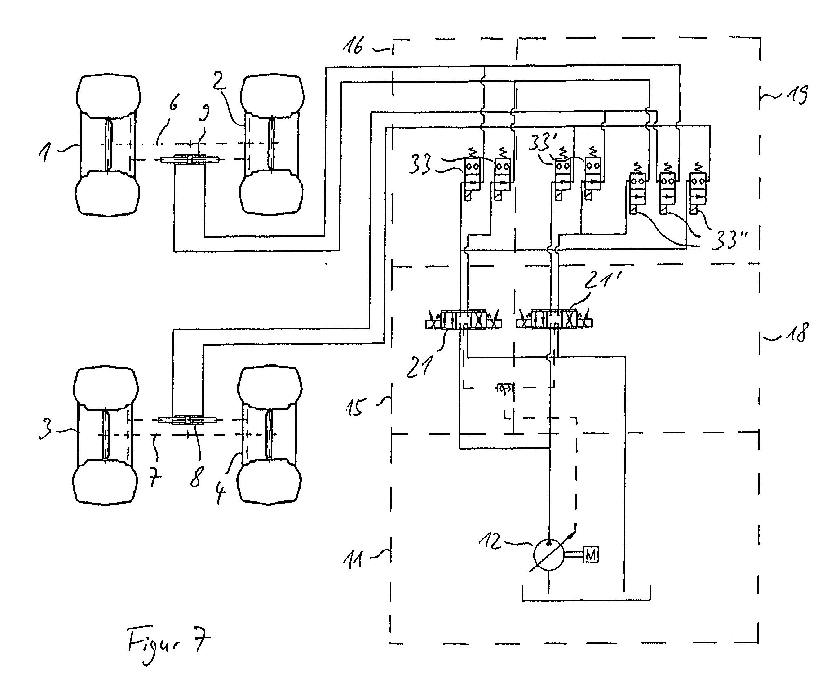

Nach einem sechsten Ausführungsbeispiel der Erfindung gemäß Figur 7 besteht im Unterschied zum ersten Ausführungsbeispiel gemäß Figur 1 und 2 die zweite Lenksteuereinheit (18) aus einem zu dem in der ersten Lenksteuereinheit (15) enthaltenen Steuerventil (21) baugleichen Steuerventil (21'). Die Steuerventile (21, 21') werden jeweils über die Hydraulikpumpe (12) beaufschlagt. Im Störungszustand schalten die paarweise angeordneten Schaltventile (33) und (33') der ersten Schalteinheit (16) bzw. der zweiten Schalteinheit (19) in Sperrstellung. Die drei weiteren Schaltventile (33'') der zweiten Schalteinheit (19) schalten selbsttätig in eine Schaltposition, in der abhängig von dem Betrieb eines Steuerventils (21) oder (21') die Lenkzylinder (8, 9) in der bereits beschriebenen Weise, in Reihe geschaltet, nacheinander mit dem Fluid beaufschlagt werden.

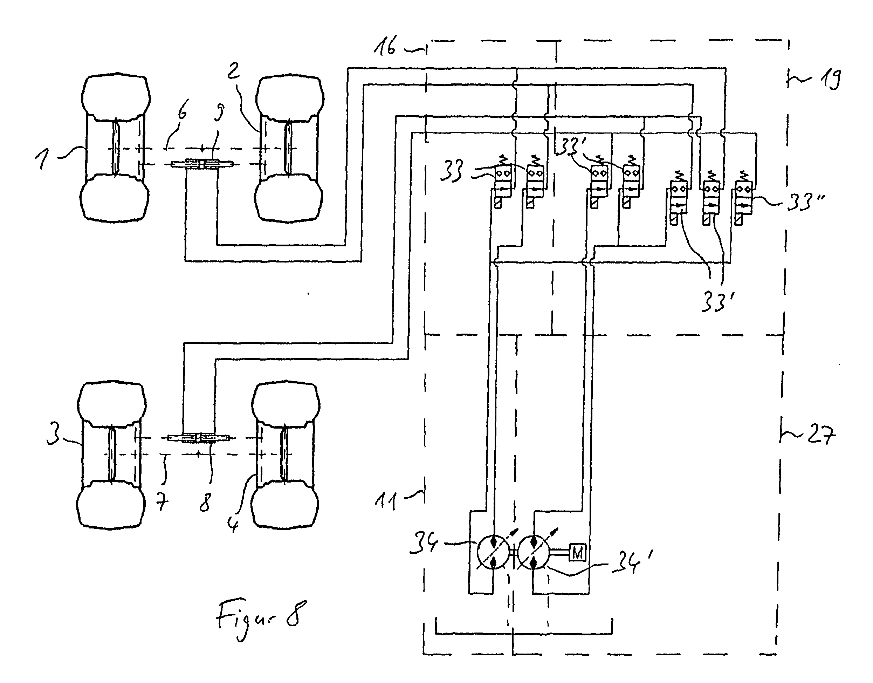

Nach einem siebten Ausführungbeispiel gemäß Figur 8 sind die im vorhergehenden Ausführungsbeispiel beschriebenen Schalteinheiten (16) und (19) jeweils mit einer Verstellpumpe (34) und (34') direkt verbunden. Die Verstellpumpen (34, 34') sind jeweils proportional ansteuerbar und ermöglichen eine voneinander unabhängige Ansteuerung der Lenkzylinder (8, 9). Im Schadensfall bzw. Störungszustand kann die Lenkung mittels einer einzigen Verstellpumpe (34) oder (34') entsprechend der vorherigen Ausführungsbeispiele aufrechterhalten werden, wobei das Fluid von der entsprechenden Verstellpumpe (34, 34') über die Steuervetile (33', 33'') zu den Lenkzylindern (8, 9) geführt wird.

## Patentansprüche

1. Lenkvorrichtung für selbstfahrende Arbeitsmaschine und Zugmaschine mit jeweils einem Räderpaar zugeordneten Lenkzylindern (8, 9); denen ein Fluid von einer Ventileinheit zuführbar ist und mit mindestens einer Hydraulikpumpe, die über Hydraulikleitungen mit der Ventileinheit verbunden sind, wobei die Ventileinheit eine jeweils einem Lenkzylinden (8, 9) zugeordnete Schalteinheit (16, 19) mit Schaltventilen (24, 25, 25') aufweist, **dadurch gekennzeichnet,**
- **dass** im normalen Betriebszustand die Lenkzylinder (8, 9) über separate Lenksteuereinheiten (15, 18) ansteuerbar sind und
- **dass** die Schaltventile (24, 25, 25') in einem Störungszustand selbsttätig derart umschaltbar sind, dass die Lenkzylinder (8, 9) über eine einzige Lenksteuereinheit (18) ansteuerbar sind.

2. Lenkvorrichtung nach Anspruch 1, **dadurch gekennzeichnet, daß** die Schaltventile (24, 25, 25') in dem Störungszustand derart geschaltet sind, daß die Lenkzylinder (8, 9) in Reihe geschaltet und nacheinander von dem Fluid beaufschlagt werden.

3. Lenkvorrichtung nach Anspruch 1 oder 2, **dadurch gekennzeichnet, daß** die Schalteinheit (19) zwischen der Lenksteuereinheit (18) und dem diesen zugeordneten Lenkzylinder (9) angeordnet ist.

4. Lenkvorrichtung nach einem der Ansprüche 1 bis 3, **dadurch gekennzeichnet, daß** im Störungszustand der die Lenkzylinder (8, 9) beaufschlagende Schalteinheit (19) eine hydraulische Einrichtung (22) aufweisende Lenksteuereinheit (18) zugeordnet ist.

5. Lenkvorrichtung nach Anspruch 4, **dadurch gekennzeichnet, daß** die die hydraulische Einrichtung (22) aufweisende Lenksteuereinheit (18) mit einer radgetriebenen Notlenkpumpe (28) in Wirkverbindung steht.

6. Lenkvorrichtung nach einem der Ansprüche 1 bis 5, **dadurch gekennzeichnet, daß** die Lenksteuereinheiten (15, 18) derart ausgebildet sind, daß den Lenkzylindern (8, 9) im Betriebszustand jeweils ein Steuerventil (21, 21') zugeordnet sind.

7. Lenkvorrichtung nach Anspruch 6, **dadurch gekennzeichnet, dass** die Steuerventile (21, 21') jeweils als elektromagnetisch betätigbare Proportionalventile ausgebildet sind.

8. Lenkvorrichtung nach einem der Ansprüche 1 bis 7, **dadurch gekennzeichnet, daß** die Schalteinheiten (16, 19) zumindest im Betriebszustand jeweils mit einer Verstellpumpe (34, 34') direkt in Verbindung stehen.

9. Lenkvorrichtung nach einem der Ansprüche 1 bis 8, **dadurch gekennzeichnet, daß** die Schaltventile (24, 25, 25') als direkt geschaltete Sitzventile ausgebildet sind.

10. Lenkvorrichtung nach einem der Ansprüche 1 bis 9, **dadurch gekennzeichnet, daß** die Schaltventile (25, 25') der zweiten Schalteinheit (19) im Betriebszustand in einer solchen Schaltstellung schaltbar sind, daß das die zweite Schalteinheit (19) beaufschlagende Fluid ausschließlich zu dem einer in Fahrtrichtung vorderen Achse (6) zugeordneten zweiten Lenkzylinder (9) förderbar ist.

11. Lenkvorrichtung nach einem der Ansprüche 1 bis 10, **dadurch gekennzeichnet, daß** die Schaltventile (24) der ersten Schalteinheit (16) im Störungszustand selbsttätig in eine Sperrposition schaltbar sind.

12. Lenkvorrichtung nach einem der Ansprüche 1 bis 11, **dadurch gekennzeichnet, daß** die Schaltventile (24, 25, 25') durch Federrückstellung in die für den Störungszustand vorgesehene Schaltposition bringbar sind.

13. Lenkvorrichtung nach einem der Ansprüche 1 bis 12, **dadurch gekennzeichnet, daß** die zweite Lenksteuereinheit (18) ein Lenksinnventil (31) zugeordnet ist, das in Abhängigkeit von der Positionierung der Fahrerkabine die zweite Lenksteuereinheit (18) jeweils dem der in Fahrtrichtung vorderen Achse (6) zugehörigen Lenkzylinder (8, 9) zuordnet.

14. Lenkvorrichtung nach einem der Ansprüche 6 bis 13, **dadurch gekennzeichnet, dass** im Betriebzustand die Steuerventile (25, 25') derart geschaltet sind, dass das Fluid zu der hydraulischen Einrichtung (22) zurückgeleitet wird, wobei die mindestens einem Steuerventil (21, 21') zugeordneten Schaltventile (24, 24') in Durchlass geschaltet sind.

15. Lenkvorrichtung nach einem der Ansprüche 1 bis 14, **dadurch gekennzeichnet, daß** die hydraulische Einrichtung (22) mit einem Lenkrad und einem Sollwertgeber zur Erzeugung eines Lenksollwerts für die Ansteuerung der ersten Lenksteuereinheit (15) wirkverbunden ist.

16. Lenkvorrichtung nach einem der Ansprüche 5 bis 15, **dadurch gekennzeichnet, dass** das Steuerventil (20) der Versorgungseinheit (11) derart ansteuerbar ist, dass ein Teilfluidstrom von einem ersten Hydraulikkreislauf (13) einem zweiten, durch die Notlenkpumpe (28) beaufschlagten Hydraulikkreislauf (26) zuführbar ist, so dass stets ein konstanter Förderstrom der zweiten Lenksteuereinheit (18) zur Verfügung gestellt wird.

17. Lenkvorrichtung nach Anspruch 16, **dadurch gekennzeichnet, dass** das Steuerventil (20) in Abhängigkeit von der Fahrgeschwindigkeit der Maschine ansteuerbar ist

18. Lenkvorrichtung nach einem der Ansprüche 4 bis 17, **dadurch gekennzeichnet, dass** die hydraulische Einrichtung (22) mit einem Kühler (30) verbunden ist, derart, dass das zurückgeleitete Fluid unabhängig von der Fahrgeschwindigkeit auf eine konstante Betriebstemperatur gekühlt wird.

## Claims

1. A steering arrangement for a self-propelled working machine and a tractor comprising steering cylinders (8, 9) which are respectively associated with a pair of wheels and to which a fluid can be supplied by a valve unit and at least one hydraulic pump connected by way of hydraulic lines to the valve unit, wherein the valve unit has a switching unit (16, 19) with switching valves (24, 25, 25'), the switching unit being respectively associated with a steering cylinder (8, 9), **characterised in that**
- in the normal operating condition the steering cylinders (8, 9) are actuable by way of separate steering control units (15, 18), and
- in a fault condition the switching valves (24, 25, 25') can be automatically switched over in such a way that the steering cylinders (8, 9) are actuable by way of a single steering control unit (18).

2. A steering arrangement according to claim 1 **characterised in that** the switching valves (24, 25, 25') in the fault condition are connected in such a way that the steering cylinders (8, 9) are connected in series and are successively acted upon by the fluid.

3. A steering arrangement according to claim 1 or claim 2 **characterised in that** the switching unit (19) is arranged between the steering control unit (18) and the steering cylinder (9) associated with same.

4. A steering arrangement according to one of claims 1 to 3 **characterised in that** in the fault condition the steering control unit (18) having a hydraulic device (22) is associated with the switching unit (19) which acts on the steering cylinders (8, 9).

5. A steering arrangement according to claim 4 **characterised in that** the steering control unit (18) having the hydraulic device (22) is operatively connected to a wheel-driven emergency steering pump (28).

6. A steering arrangement according to one of claims 1 to 5 **characterised in that** the steering control units (15, 18) are so designed that a respective control valve (21, 21') is associated with the steering cylinders (8, 9) in the operating condition.

7. A steering arrangement according to claim 6 **characterised in that** the control valves (21, 21') are each in the form of electromagnetically actuable proportional valves.

8. A steering arrangement according to one of claims 1 to 7 **characterised in that** at least in the operating condition the switching units (16, 19) are respectively directly connected to a variable displacement pump (34, 34').

9. A steering arrangement according to one of claims 1 to 8 **characterised in that** the switching valves (24, 25, 25') are in the form of directly switched seat valves.

10. A steering arrangement according to one of claims 1 to 9 **characterised in that** the switching valves (25, 25') of the second switching unit (19) are switchable in the operating condition in such a switching position that the fluid acting on the second switching unit (19) can be conveyed exclusively to the second steering cylinder (9) associated with an axle (6) which is the front axle in the direction of travel.

11. A steering arrangement according to one of claims 1 to 10 **characterised in that** the switching valves (24) of the first switching unit (16) are automatically switchable into a blocking position in the fault condition.

12. A steering arrangement according to one of claims 1 to 11 **characterised in that** the switching valves (24, 25, 25') can be moved by spring return into the switching position provided for the fault condition.

13. A steering arrangement according to one of claims 1 to 12 **characterised in that** associated with the second steering control unit (18) is a steering direction valve (31) which in dependence on the positioning of the driver cab associates the second steering control unit (18) with the respective steering cylinder (8, 9) associated with the axle (6) which is the front axle in the direction of travel.

14. A steering arrangement according to one of claims 6 to 13 **characterised in that** in the operating condition the control valves (25, 25') are switched in such a way that the fluid is passed back to the hydraulic device (22), wherein the switching valves (24, 24') associated with at least one control valve (21, 21') are switched into the open condition.

15. A steering arrangement according to one of claims 1 to 14 **characterised in that** the hydraulic device (22) is operatively connected to a steering wheel and a reference value generator for producing a steering reference value for actuation of the first steering control unit (15).

16. A steering arrangement according to one of claims 5 to 15 **characterised in that** the control valve (20) of the supply unit (11) is actuable in such a way that a partial fluid flow can be fed from a first hydraulic circuit (13) to a second hydraulic circuit (26) acted upon by the emergency steering pump (28), so that a constant conveyor flow is always made available to the second steering control unit (18).

17. A steering arrangement according to claim 16 **characterised in that** the control valve (20) is actuable in dependence on the speed of travel of the machine.

18. A steering arrangement according to one of claims 4 to 17 **characterised in that** the hydraulic device (22) is connected to a radiator (30) in such a way that the fluid which is fed back is cooled to a constant operating temperature independently of the speed of travel.

## Revendications

1. Dispositif de direction pour machine de travail automotrice et machine de traction, avec des vérins de direction (8, 9) associés à chaque paire de roues, qui peuvent être alimentés en fluide par une unité de vannes, et avec au moins une pompe hydraulique qui est reliée à l'unité de vannes par des conduites hydrauliques, l'unité de vannes comprenant une unité de commutation (16, 19) associée à chaque vérin de direction (8, 9), avec des vannes de commutation (24, 25, 25'), **caractérisé en ce que** :
- en mode de fonctionnement normal, les vérins de direction (8, 9) peuvent être pilotés par des unités de commande de direction (15, 18) distinctes ; et
- en mode de fonctionnement perturbé, les vannes de commutation (24, 25, 25') peuvent être commutées automatiquement de manière que les vérins de direction (8, 9) soient pilotés par une unique unité de commande de la direction (18).

2. Dispositif de direction selon la revendication 1, **caractérisé en ce que**, en mode de fonctionnement perturbé, les vannes de commutation (24, 25, 25') sont commutées de manière que les vérins de direction (8, 9) soient montés en série et alimentés successivement par le fluide.

3. Dispositif de direction selon la revendication 1 ou 2, **caractérisé en ce que** l'unité de commutation (19) est implantée entre l'unité de commande de la direction (18) et le vérin de direction (9) qui lui est associé.

4. Dispositif de direction selon l'une des revendications 1 à 3, **caractérisé en ce que** l'unité de commutation (19) qui alimente les vérins de direction (8, 9) en mode de fonctionnement perturbé est associée à une unité de commande de la direction (18) possédant un dispositif hydraulique (22).

5. Dispositif de direction selon la revendication 4, **caractérisé en ce que** l'unité de commande de la direction (18) possédant le dispositif hydraulique (22) interagit avec une pompe de direction de secours (28) qui est entraînée par les roues.

6. Dispositif de direction selon l'une des revendications 1 à 5, **caractérisé en ce que** les unités de commande de la direction (15, 18) sont configurées de manière que chacun des vérins de direction (8, 9) soit associé en mode de fonctionnement normal à l'une des vannes de commande (21, 21').

7. Dispositif de direction selon la revendication 6, **caractérisé en ce que** les vannes de commande (21, 21') prennent la forme de vannes proportionnelles commandées électromagnétiquement.

8. Dispositif de direction selon l'une des revendications 1 à 7, **caractérisé en ce que**, au moins en mode de fonctionnement normal, les unités de commutation (16, 19) sont reliées directement à une pompe à cylindrée variable (34, 34').

9. Dispositif de direction selon l'une des revendications 1 à 8, **caractérisé en ce que** les vannes de commutation (24, 25, 25') prennent la forme de vannes à siège commandées directement.

10. Dispositif de direction selon l'une des revendications 1 à 9, **caractérisé en ce que**, en mode de fonctionnement normal, les vannes de commutation (25, 25') de la deuxième unité de commutation (19) peuvent être commutées dans une position de commutation telle que le fluide alimentant la deuxième unité de commutation (19) puisse être envoyé exclusivement vers un deuxième vérin de direction (9) associé à un essieu avant (6) dans le sens de déplacement.

11. Dispositif de direction selon l'une des revendications 1 à 10, **caractérisé en ce que**, en mode de fonctionnement perturbé, les vannes de commutation (14) de la première unité de commutation (16) peuvent être commutées automatiquement dans une position de blocage.

12. Dispositif de direction selon l'une des revendications 1 à 11, **caractérisé en ce que** les vannes de commutation (24, 25, 25') peuvent être amenées par un rappel élastique dans la position de commutation prévue pour le mode de fonctionnement perturbé.

13. Dispositif de direction selon l'une des revendications 1 à 12, **caractérisé en ce que** la deuxième unité de commande de la direction(18) est associée à une vanne de sens de direction (31) qui, en fonction de la position de la cabine de conduite, associe la deuxième unité de commande de la direction (18) à celui des vérins de direction (8, 9) qui est associé à l'essieu avant (6) dans le sens de déplacement.

14. Dispositif de direction selon l'une des revendications 6 à 13, **caractérisé en ce que**, en mode de fonctionnement normal, les vannes de commutation (25, 25') sont commutées de manière que le fluide soit renvoyé au dispositif hydraulique (22), les vannes de commutation (24, 24') associées à au moins une vanne de commande (21, 21') étant commutées en mode passant.

15. Dispositif de direction selon l'une des revendications 1 à 14, **caractérisé en ce que** le dispositif hydraulique (22) est en interaction avec un volant de direction et un transmetteur de valeur de consigne afin de produire une valeur de consigne de direction pour l'attaque de la première unité de commande de la direction (15).

16. Dispositif de direction selon l'une des revendications 5 à 15, **caractérisé en ce que** la vanne de commande (20) de l'unité d'alimentation (11) peut être actionnée de manière qu'un flux partiel de fluide puisse être envoyé d'un premier circuit hydraulique (13) vers un deuxième circuit hydraulique (26), alimenté par la pompe de direction de secours (28), si bien qu'un flux constant reste toujours mis à la disposition de la deuxième unité de commande de la direction (18).

17. Dispositif de direction selon la revendication 16, **caractérisé en ce que** la vanne de commande (20) peut être commandée en fonction de la vitesse de déplacement de la machine.

18. Dispositif de direction selon l'une des revendications 4 à 17, **caractérisé en ce que** le dispositif hydraulique (22) est relié à un radiateur (30) afin que le fluide refoulé soit refroidi à une température de fonctionnement constante, indépendamment de la vitesse de déplacement.
